# EUROPEAN PATENT APPLICATION

(11) **EP 3 306 025 A1**
(43) Date of publication of application: **11.04.2018**
(21) Application number: 16799827.7
(22) Date of filing: 12.05.2016
(51) Int. Cl.: E06B 3/54, B60J 1/10, E05F 11/38, E06B 7/28

(54) **VIBRATION-DAMPING-MEMBER-EQUIPPED WINDOW PLATE, AND VIBRATION DAMPING MEMBER**

(30) Priority: 26.05.2015 JP 2015106394
(71) Applicant: Asahi Glass Company, Limited, Tokyo 100-8405 (JP)
(72) Inventor: SASE, Masayuki, Tokyo 100-8405 (JP)
(74) Representative: Müller-Boré & Partner Patentanwälte PartG mbB
(86) International application number: PCT/JP2016/064129
(87) International publication number: WO 2016/190119

(57) **Abstract**

A window plate with vibration damping member includes a window plate to be mounted on a window frame and a vibration damping member for reducing vibration of the window plate. The vibration damping member includes a opposite plate that is provided at one or both surfaces of the window plate so as to be opposite the window plate, a viscoelastic layer provided between the window plate and the opposite plate, and a compression member provided on the surface of the window plate as viewed in a plate thickness direction to compress the viscoelastic layer in the plate thickness direction.

## Description

### BACKGROUND OF THE INVENTION

### 1. Field of the Invention

The present invention relates to a window plate with vibration damping member, and a vibration damping member.

### 2. Description of the Related Art

A vibration damping member for reducing vibration of window plate has been developed. In Patent Document 1, structures of vibration damping members are disclosed. For example, (1) a structure of a vibration damping member such that a U-shaped metal channel clips a lower side of a window plate via rubber, and (2) a structure of a vibration damping member in which a rubber plate and a metal plate are laminated, are disclosed.

### [Citation List]

### [Patent Literature]

[PTL 1] Japanese Patent No. 3849453.

### SUMMARY OF THE INVENTION

### [Technical Problem]

However, the following problems exist in the related art. First, (1) if a vibration damping member is configured such that a U-shaped metal channel clips a lower side of a window plate via rubber, the U-shaped channel needs to be placed within a peripheral edge area including an end surface of the window plate. Accordingly, design flexibility was not high.

Next, (2) the structure in which a rubber plate and a metal plate are laminated does not have sufficient damping property.

### [Solution to Problem]

The present invention is made in light of the above problems, and provides a window plate with vibration damping member in which design flexibility of the vibration damping member and damping property are improved.

According to an aspect of the present invention, there is provision for a window plate with vibration damping member including a window plate to be mounted on a window frame and a vibration damping member for reducing vibration of the window plate. The vibration damping member includes an opposite plate that is provided at one or both surfaces of the window plate so as to be opposite the window plate, a viscoelastic layer provided between the window plate and the opposite plate, and a compression member provided on the surface of the window plate as viewed in a plate thickness direction to compress the viscoelastic layer in the plate thickness direction.

### [Advantageous effect of Invention]

According to an aspect of the present invention, a window plate with vibration damping member can be provided, in which design flexibility of the vibration damping member and damping property are improved.

### BRIEF DESCRIPTION OF THE DRAWINGS

Other objects, features and advantages of the present invention will become more apparent from the following detailed description when read in conjunction with the accompanying drawings.
[FIGURE 1]

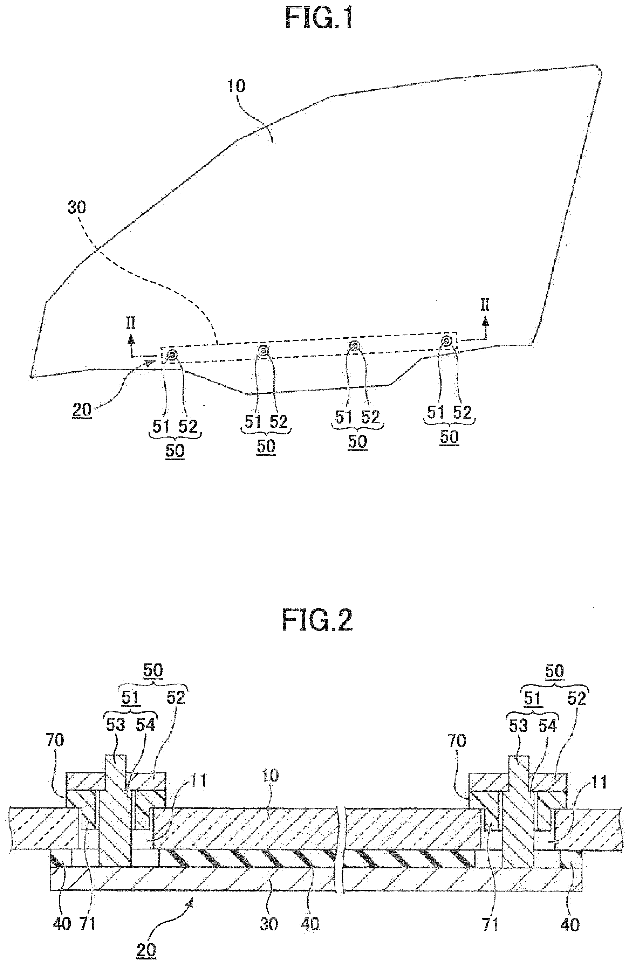

   Fig. 1 is a front view of a window plate with vibration damping member according to a first embodiment.
[FIGURE 2]
   Fig. 2 is a cross-sectional view of the window plate with vibration damping member taken along a line II-II in FIG. 1.
[FIGURE 3]

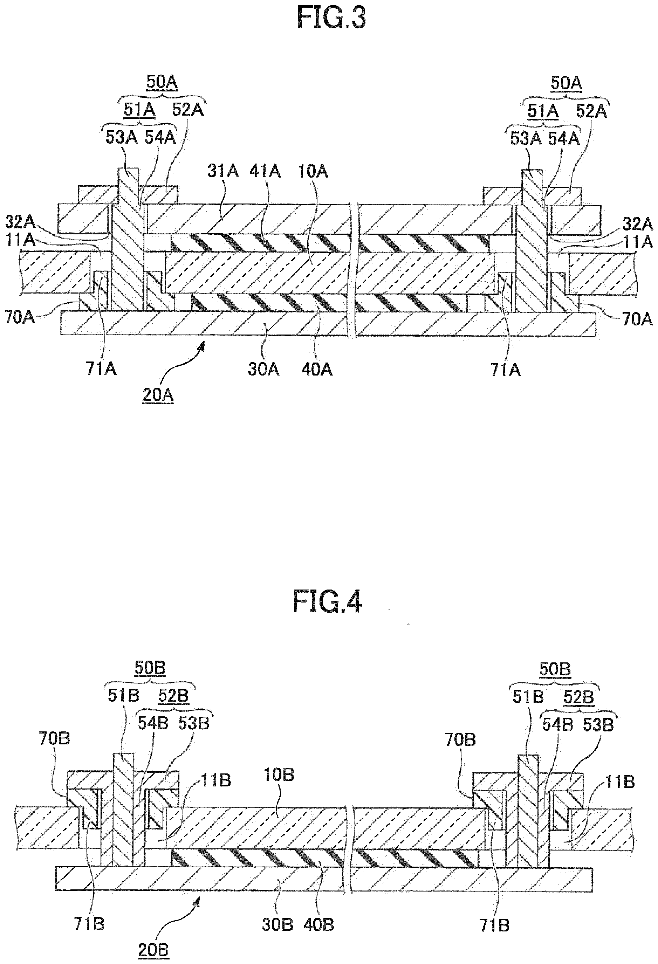

   Fig. 3 is a cross-sectional view of a window plate with vibration damping member according to a second embodiment.
[FIGURE 4]
   Fig. 4 is a cross-sectional view of a window plate with vibration damping member according to a third embodiment.
[FIGURE 5]

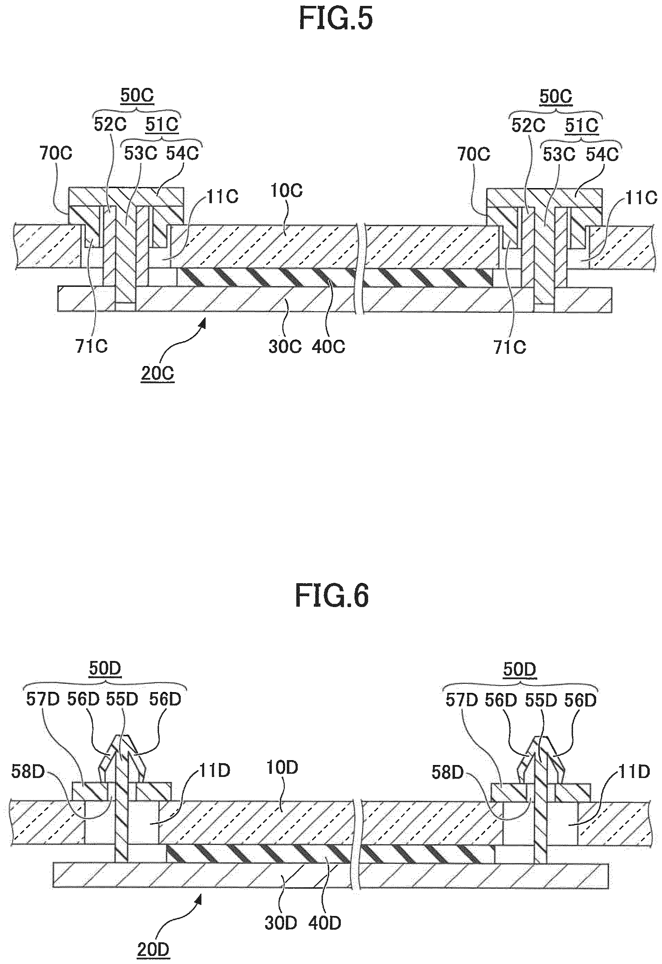

   Fig. 5 is a cross-sectional view of a window plate with vibration damping member according to a fourth embodiment.
[FIGURE 6]
   Fig. 6 is a cross-sectional view of a window plate with vibration damping member according to a fifth embodiment.
[FIGURE 7]

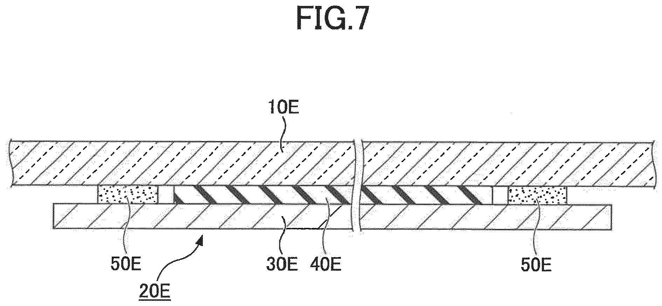

   Fig. 7 is a cross-sectional view of a window plate with vibration damping member according to a sixth embodiment.

### DETAILED DESCRIPTION OF THE PREFERRED EMBODIMENTS

In the following, with reference to drawings, embodiments of the present invention will be described. In each drawing, the same reference symbol is assigned to the same component, and redundant explanation will be omitted.

### <First embodiment>

Fig. 1 is a front view of a window plate with vibration damping member according to a first embodiment. Fig. 2 is a cross-sectional view of the window plate with vibration damping member taken along a line II-II in FIG. 1. The window plate with vibration damping member includes a window plate 10 and a vibration damping member 20.

The window plate 10 is mounted on a window frame. The window plate 10 is mounted, for example, on a window frame of a side door of a car, such that the window plate can be vertically moved between a closed position in which a window of the window frame is closed and an open position in which the window of the window frame is opened. The window plate 10 is formed of a transparent material such as glass or a resin.

Types of the window frame to which the window plate 10 is to be mounted are not limited to specific ones. The window plate 10 may be mounted on a window frame of a vehicle such as a car or a train, or on a window frame of a building. Further, the window plate 10 may be fixed on the window frame such that the window plate 10 cannot be moved vertically. When the vehicle or the building on which the window plate 10 is mounted vibrates, the window plate 10 also vibrates regardless of whether the window plate 10 is fixed on the window frame or is mounted on the window frame in a vertically movable state.

The vibration damping member 20 is attached to the window plate 10 to reduce vibration of the window plate 10. The vibration damping member 20 includes an opposite plate 30, a viscoelastic layer 40, and a compression member 50.

The opposite plate 30 is provided at one of the surfaces of the window plate 10 (interior or exterior of the window plate 10), and is opposite the window plate 10. The opposite plate 30 has higher rigidity than the viscoelastic layer 40. That is, a Young's modulus of the opposite plate 30 is higher than that of the viscoelastic layer 40. The opposite plate 30 is formed of metal, a resin, or the like.

The viscoelastic layer 40 is provided between the window plate 10 and the opposite plate 30. The viscoelastic layer 40 absorbs the vibration of the window plate 10 by deforming viscoelastically. The viscoelastic layer 40 is formed of rubber or a resin. Examples of rubber forming the viscoelastic layer 40 are, butadiene rubber, ethylene-propylene-diene rubber, isoprene rubber, chloroprene rubber, nitrile rubber, neoprene rubber, butyl rubber, acrylic rubber, urethane rubber, silicone rubber, and fluororubber, but are not limited to those mentioned here. Also, examples of resin forming the viscoelastic layer 40 are, acrylic resin, urethane resin, and vinyl chloride resin, but are not limited to those mentioned here. Further, the viscoelastic layer 40 may be provided on the whole surface of the opposite plate 30 that is opposite the window plate 10, or may be provided on a part of the surface of the opposite plate 30 that is opposite the window plate 10.

The compression member 50 is provided on the surface of the window plate 10 as viewed in a plate thickness direction of the window plate 10, as illustrated in FIG. 1. Four units of the compression members 50 are provided in FIG. 1, but the number of the compression members 50 is not limited to four. One or more compression members 50 should be provided. The compression member 50 restricts movement of the window plate 10 and the opposite plate 30 in the plate thickness direction relative to each other, and compresses the viscoelastic layer 40 in the plate thickness direction.

According to the present embodiment, the compression member 50 is provided on the surface of the window plate 10 as viewed in the plate thickness direction of the window plate 10, and does not protrude beyond the planar area of the window plate 10. Therefore, the compression member 50 is less likely to be affected by the surrounding structure of the window plate 10.

In addition, since the vibration damping member 20 can be arranged on any locations at the window plate 10 by using the compression member 50, the design flexibility of the vibration damping member 20 improves compared with the conventional vibration damping members. Further, if the vibration damping member 20 is provided on the surface of the window plate 10 as viewed in the plate thickness direction of the window plate 10 so as not to protrude beyond the planar area of the window plate 10, the vibration damping member 20 is less likely to be affected by surrounding environment of the window plate 10.

Further, since the compression member 50 compresses the viscoelastic layer 40 in the plate thickness direction of the window plate 10, damping property improves. With respect to improving the damping property by compressing the viscoelastic layer 40, the following reasons (1) to (3) may be considered: (1) compressing the viscoelastic layer 40 makes a distance between the window plate 10 and the opposite plate 30 shorter, which makes propagation of vibration from the window plate 10 to the opposite plate 30 easier, (2) compressing the viscoelastic layer 40 increases hardness of the viscoelastic layer 40, which makes propagation of vibration from the window plate 10 to the opposite plate 30 easier, (3) by compressing the viscoelastic layer 40, molecules of the viscoelastic layer 40 are more densely arranged between the window plate 10 and the opposite plate 30, which makes propagation of vibration from the window plate 10 to the opposite plate 30 easier.

It is desirable that the compression member 50 compresses the viscoelastic layer 40 in the plate thickness direction of the window plate 10, such that thickness of the viscoelastic layer 40 becomes equal to or less than 90% of the viscoelastic layer 40 in a natural state (a state in which no external force is applied to the viscoelastic layer 40). If the thickness of the viscoelastic layer 40 becomes, by compression, equal to or less than 90% of the viscoelastic layer 40 in the natural state, a good damping property can be ensured. The viscoelastic layer 40 is more preferably compressed such that the thickness becomes equal to or less than 80% of the viscoelastic layer 40 in the natural state, and further more preferably compressed such that the thickness becomes equal to or less than 70% of the viscoelastic layer 40 in the natural state. By controlling the degree of compression of the viscoelastic layer 40, a desired damping property can be ensured.

A through hole 11 penetrating the window plate 10 in the plate thickness direction may be formed in the window plate 10 in order that the compression member 50 is provided on the surface of the window plate 10 as viewed in the plate thickness direction of the window plate 10, and the compression member 50 may be inserted in the through hole 11.

The compression member 50 includes, for example, a male screw 51 and a female screw 52 into which the male screw 51 is screwed. The male screw 51 is fixed to the opposite plate 30 by means of welding, bonding, screwing, inlaying, or the like, and is inserted in the through hole 11 of the window plate 10. The female screw 52 is attached to a tip of the male screw 51. The female screw 52 is disposed on the side opposite the opposite plate 30 with respect to the window plate 10. By rotating the female screw 52, the window plate 10 and the opposite plate 30 can be fastened in the plate thickness direction, thereby the viscoelastic layer 40 can be compressed in the plate thickness direction.

In the present embodiment, the male screw 51 is fixed to the opposite plate 30. However, in another embodiment, the male screw 51 may be inserted into a through hole (not illustrated in the drawings) that is formed in the opposite plate 30. In a case where the male screw 51 is inserted into a through hole in the opposite plate 30, a flange having a larger diameter than the through hole in the opposite plate 30 may be formed at a -tip of the male screw 51, and the flange may be disposed on the side opposite the window plate 10 with respect to the opposite plate 30. When such a structure is adopted, similar to the case described above, the window plate 10 and the opposite plate 30 can be fastened in the plate thickness direction by rotating the female screw 52, thereby the viscoelastic layer 40 can be compressed in the plate thickness direction.

When the compression member 50 includes the male screw 51 and the female screw 52, the compression member 50 may also include a stopper 54. The stopper 54 restricts movement of the male screw 51 and the female screw 52 in the plate thickness direction of the window plate 10 relative to each other. By providing the stopper 54 to the compression member 50, compressive force of the viscoelastic layer 40 can be managed such that variation in the compressive force, which may occur because of difference of operators during assembly, can be reduced.

The stopper 54 may be provided on the male screw 51. For example, the male screw 51 may be a stepped screw. The male screw 51 includes a male screw main body 53 which is screwed into the female screw 52, and a stopper 54 having a larger diameter than the male screw main body 53. The male screw 51 is fixed to the opposite plate 30, and is inserted into the through hole 11 of the window plate 10. By contacting the female screw 52 with the stopper 54 of the male screw 51, movement of the female screw 52 in the plate thickness direction relative to the male screw 51 can be restricted.

The male screw 51 and the female screw 52 are formed of metal, but may be formed of a resin so as to reduce damage to the window plate 10.

When at least a part of the compression member 50 is formed of metal, the vibration damping member 20 may include a cushioning member 70 in order to avoid contacting the window plate 10 with the part of the compression member 50 formed of metal. Provision of the cushioning member 70 can reduce damage to the window plate 10, which is especially effective when the window plate 10 is formed of glass.

The cushioning member 70 is formed of a resin or rubber, similar to the viscoelastic layer 40. The cushioning member 70 may have viscoelasticity similar to the viscoelastic layer 40, but may have higher rigidity than the viscoelastic layer 40. That is, the cushioning member 70 may have a higher Young's modulus than the viscoelastic layer 40. Note that the viscoelastic layer 40 may also serve a same role as the cushioning member 70.

The cushioning member 70 may enter the through hole 11 of the window plate 10, which can further avoid contacting the window plate 10 with the compression member 50 inside the through hole 11. The cushioning member 70 may include a cylindrical member 71 surrounding the compression member 50, so as to surely avoid contacting the window plate 10 with the compression member 50.

### <Second embodiment>

Fig. 3 is a cross-sectional view of a window plate with vibration damping member according to a second embodiment. The window plate with vibration damping member according to the second embodiment is different from that of the first embodiment in that opposite plates and viscoelastic layers are provided on both surfaces of the window plate. In the following, different points will be mainly described. The window plate with vibration damping member according to the second embodiment includes a window plate 10A and a vibration damping member 20A.

The vibration damping member 20A is attached to the window plate 10A to reduce vibration of the window plate 10A. The vibration damping member 20A includes opposite plates 30A and 31A, viscoelastic layers 40A and 41A, and a compression member 50A.

The opposite plate 30A is provided at one surface of the window plate 10A, and is opposite the window plate 10A. Also, the opposite plate 31A is provided at the other surface of the window plate 10A, which is opposite the window plate 10A. The opposite plates 30A and 31A are formed of the same material, but in another embodiment, the opposite plates 30A and 31A may be formed of different materials. Further, the opposite plates 30A and 31A are formed in the same size, but in another embodiment, the opposite plates 30A and 31A may be formed in different sizes.

The viscoelastic layer 40A is provided between the window plate 10A and the opposite plate 30A. On the other side, the viscoelastic layer 41A is provided between the window plate 10A and the opposite plate 31A. The viscoelastic layers 40A and 41A absorb vibration of the window plate 10A by deforming viscoelastically. The viscoelastic layers 40A and 41A are formed of the same material, but in another embodiment, the viscoelastic layers 40A and 41A may be formed of different materials. Further, the viscoelastic layers 40A and 41A are formed in the same size, but in another embodiment, the viscoelastic layers 40A and 41A may be formed in different sizes.

Similar to the first embodiment, the compression member 50A is provided on the surface of the window plate 10A as viewed in the plate thickness direction of the window plate 10A, which restricts movement of the window plate 10A and the opposite plates 30A and 31A in the plate thickness direction relative to each other, and compresses the viscoelastic layers 40A and 41A in the plate thickness direction. Therefore, design flexibility of the vibration damping member 20A is high, and a good damping property can be ensured.

A through hole 11A penetrating the window plate 10A in the plate thickness direction may be formed in the window plate 10A in order that the compression member 50A is provided on the surface of the window plate 10A as viewed in the plate thickness direction of the window plate 10A, and the compression member 50A may be inserted in the through hole 11A.

The compression member 50A includes, for example, a male screw 51A and a female screw 52A into which the male screw 51A is screwed. The male screw 51A is fixed to the opposite plate 30A, and is inserted in a through hole 32A of the opposite plate 31A and in the through hole 11A of the window plate 10A. The female screw 52A is attached to a tip of the male screw 51A. The female screw 52A is disposed on the side opposite the window plate 10A with respect to the opposite plate 31A. By rotating the female screw 52A, the window plate 10A and the opposite plates 30A and 31A can be fastened in the plate thickness direction, thereby the viscoelastic layers 40A and 41A can be compressed in the plate thickness direction.

In the present embodiment, the male screw 51A is fixed to the opposite plate 30A. However, in another embodiment, the male screw 51A may be inserted into a through hole (not illustrated in the drawings) that is formed in the opposite plate 30A. In a case where the male screw 51A is inserted into a through hole in the opposite plate 30A, a flange having a larger diameter than the through hole in the opposite plate 30A may be formed at a tip of the male screw 51A. The flange may be disposed on the side opposite the window plate 10A with respect to the opposite plate 30A. When such a structure is adopted, similar to the case described above, the window plate 10A and the opposite plates 30A and 31A can be fastened in the plate thickness direction by rotating the female screw 52A, thereby the viscoelastic layers 40A and 41A can be compressed in the plate thickness direction.

Similar to the first embodiment, the compression member 50A may include a stopper 54A. The stopper 54A restricts movement of the male screw 51A and the female screw 52A in the plate thickness direction of the window plate 10A relative to each other. Accordingly, compressive force of the viscoelastic layers 40A and 41A provided on the surfaces of the window plate 10A can be managed. The stopper 54A may be provided on the male screw 51A. For example, the male screw 51A may be a stepped screw. The male screw 51A includes a male screw main body 53A which is screwed into the female screw 52A, and a stopper 54A having a larger diameter than the male screw main body 53A.

When at least a part of the compression member 50A is formed of metal, the vibration damping member 20A may include a cushioning member 70A in order to avoid contacting the window plate 10A with the part of the compression member 50A formed of metal. Provision of the cushioning member 70A can reduce damage to the window plate 10A, which is especially effective when the window plate 10A is formed of glass.

The cushioning member 70A may enter the through hole 11A of the window plate 10A, which can further avoid contacting the window plate 10A with the compression member 50A inside the through hole 11A. The cushioning member 70A may include a cylindrical member 71A surrounding the compression member 50A inside the through hole 11A, so as to surely avoid contacting the window plate 10A with the compression member 50A.

### <Third embodiment>

Fig. 4 is a cross-sectional view of a window plate with vibration damping member according to a third embodiment. The window plate with vibration damping member according to the third embodiment is different from that of the first embodiment in that a stopper is provided on a female screw. In the following, different points will be mainly described. The window plate with vibration damping member according to the third embodiment includes a window plate 10B and a vibration damping member 20B.

The vibration damping member 20B is attached to the window plate 10B to reduce vibration of the window plate 10B. The vibration damping member 20B includes an opposite plate 30B, a viscoelastic layer 40B, and a compression member 50B.

The opposite plate 30B is provided at one of the surfaces of the window plate 10B, and is opposite the window plate 10B. Similar to the second embodiment, a opposite plate other than the opposite plate 30B may be provided at the other surface of the window plate 10B.

The viscoelastic layer 40B is provided between the window plate 10B and the opposite plate 30B. The viscoelastic layer 40B absorbs vibration of the window plate 10B by deforming viscoelastically.

Similar to the first embodiment, the compression member 50B is provided on the surface of the window plate 10B as viewed in the plate thickness direction of the window plate 10B, which restricts movement of the window plate 10B and the opposite plate 30B in the plate thickness direction relative to each other, and compresses the viscoelastic layer 40B in the plate thickness direction. Therefore, similar to the first embodiment described above, design flexibility of the vibration damping member 20B is high, and a good damping property can be ensured.

A through hole 11B penetrating the window plate 10B in the plate thickness direction may be formed in the window plate 10B in order that the compression member 50B is provided on the surface of the window plate 10B as viewed in the plate thickness direction of the window plate 10B, and the compression member 50B may be inserted in the through hole 11B.

The compression member 50B includes, for example, a male screw 51B and a female screw 52B into which the male screw 51B is screwed. The male screw 51B is fixed to the opposite plate 30B, and is inserted in the through hole 11B of the window plate 10B. The female screw 52B is attached to a tip of the male screw 51B. By rotating the female screw 52B, the window plate 10B and the opposite plate 30B can be fastened in the plate thickness direction, thereby the viscoelastic layer 40B can be compressed in the plate thickness direction.

In the present embodiment, the male screw 51B is fixed to the opposite plate 30B. However, in another embodiment, the male screw 51B may be inserted into a through hole (not illustrated in the drawings) that is formed on the opposite plate 30B. In a case where the male screw 51B is inserted into a through hole on the opposite plate 30B, a flange having a larger diameter than the through hole on the opposite plate 30B may be formed at a tip of the male screw 51B. The flange may be disposed on the side opposite the window plate 10B with respect to the opposite plate 30B. When such a structure is adopted, similar to the case described above, the window plate 10B and the opposite plate 30B can be fastened in the plate thickness direction by rotating the female screw 52B, thereby the viscoelastic layer 40B can be compressed in the plate thickness direction.

The compression member 50B may include a stopper 54B. The stopper 54B restricts movement of the male screw 51B and the female screw 52B in the plate thickness direction of the window plate 10B relative to each other. Accordingly, compressive force of the viscoelastic layer 40B can be managed.

The stopper 54B may be provided on the female screw 52B. The female screw 52B includes a female screw main body 53B having a larger diameter than the through hole 11B of the window plate 10B, and the stopper 54B having a smaller diameter than the through hole 11B of the window plate 10B. The female screw main body 53B is disposed on the side opposite the opposite plate 30B with respect to the window plate 10B, and is screwed into the male screw 51B. The stopper 54B is also screwed into the male screw 51B. But in another embodiment, the stopper 54B may not be screwed into the male screw 51B. By inserting the stopper 54B into the through hole 11B of the window plate 10B and by contacting the stopper 54B with the opposite plate 30B, movement of the female screw 52B in the plate thickness direction relative to the male screw 51B can be restricted.

If the female screw 52B is inserted in the through hole 11B and that the stopper 54B can be screwed into the male screw 51B as described in the present embodiment, the male screw 51B is not necessarily inserted in the through hole 11B.

When at least a part of the compression member 50B is formed of metal, the vibration damping member 20B may include a cushioning member 70B in order to avoid contacting the window plate 10B with the part of the compression member 50B formed of metal. Provision of the cushioning member 70B can reduce damage to the window plate 10B, which is especially effective when the window plate 10B is formed of glass.

The cushioning member 70B may enter the through hole 11B of the window plate 10B, which can further avoid contacting the window plate 10B with the compression member 50B inside the through hole 11B. The cushioning member 70B may include a cylindrical member 71B surrounding the compression member 50B inside the through hole 11B, so as to surely avoid contacting the window plate 10B with the compression member 50B.

### <Fourth embodiment>

Fig. 5 is a cross-sectional view of a window plate with vibration damping member according to a fourth embodiment. The window plate with vibration damping member according to the fourth embodiment is different from that of the first embodiment in that arrangement of a male screw and a female screw is opposite to the arrangement in the first embodiment. In the following, different points will be mainly described. The window plate with vibration damping member according to the fourth embodiment includes a window plate 10C and a vibration damping member 20C.

The vibration damping member 20C is attached to the window plate 10C to reduce vibration of the window plate 10C. The vibration damping member 20C includes an opposite plate 30C, a viscoelastic layer 40C, and a compression member 50C.

The opposite plate 30C is provided at one of the surfaces of the window plate 10C, and is opposite the window plate 10C. Similar to the second embodiment, an opposite plate other than the opposite plate 30C may be provided at the other surface of the window plate 10C.

The viscoelastic layer 40C is provided between the window plate 10C and the opposite plate 30C. The viscoelastic layer 40C absorbs vibration of the window plate 10C by deforming viscoelastically.

Similar to the first embodiment, the compression member 50C is provided on the surface of the window plate 10C as viewed in the plate thickness direction of the window plate 10C, which restricts movement of the window plate 10C and the opposite plate 30C in the plate thickness direction relative to each other, and compresses the viscoelastic layer 40C in the plate thickness direction. Therefore, similar to the first embodiment described above, design flexibility of the vibration damping member 20C is high, and a good damping property can be ensured.

A through hole 11C penetrating the window plate 1OC in the plate thickness direction may be formed on the window plate 10C in order that the compression member 50C is provided on the surface of the window plate 10C as viewed in the plate thickness direction of the window plate 10C, and the compression member 50C may be inserted in the through hole 11C.

The compression member 50C includes, for example, a male screw 51C and a female screw 52C into which the male screw 51C is screwed. The female screw 52C is fixed to the opposite plate 30C, and is inserted in the through hole 11C of the window plate 10C. By rotating the male screw 51C while the male screw 51C is being screwed into female screw 52C, the window plate 10C and the opposite plate 30C can be fastened in the plate thickness direction, thereby the viscoelastic layer 40C can be compressed in the plate thickness direction.

In the present embodiment, the female screw 52C is fixed to the opposite plate 30C. However, in another embodiment, the female screw 52C may not be fixed to the opposite plate 30C. When the female screw 52C is not fixed to the opposite plate 30C, a screw hole may be formed in the opposite plate 30C and the male screw 51C may be screwed into the screw hole. When such a structure is adopted, similar to the case described above, the window plate 10C and the opposite plate 30C can be fastened in the plate thickness direction by rotating the male screw 51C, thereby the viscoelastic layer 40C can be compressed in the plate thickness direction. On the other hand, when the female screw 52C is fixed to the opposite plate 30C, a screw hole may or may not be formed in the opposite plate 30C. Additionally, a cylindrical bore may be formed instead of a screw hole. A screw hole or a cylindrical bore is formed when the male screw 51C (more specifically, a male screw main body 53C that will be described later) is long.

The compression member 50C may include a stopper 54C. The stopper 54C restricts movement of the male screw 51C and the female screw 52C in the plate thickness direction of the window plate 10C relative to each other. Accordingly, compressive force of the viscoelastic layer 40C can be managed.

The stopper 54C may be provided on the male screw 51C. The male screw 51C includes a male screw main body 53C which is screwed into the female screw 52C, and the stopper 54C having a larger diameter than the male screw main body 53C. The stopper 54C is disposed on the side opposite the opposite plate 30C with respect to the window plate 10C. By contacting the stopper 54C with the female screw 52C, movement of the male screw 51C in the plate thickness direction relative to the female screw 52C can be restricted.

In the present embodiment, the stopper 54C is provided on the male screw 51C, but in another embodiment, the stopper 54C may be provided on the female screw, similar to the stopper 54B in the third embodiment.

When at least a part of the compression member 50C is formed of metal, the vibration damping member 20C may include a cushioning member 70C in order to avoid contacting the window plate 10C with the part of the compression member 50C formed of metal. Provision of the cushioning member 70C can reduce damage to the window plate 10C, which is especially effective when the window plate 10C is formed of glass.

The cushioning member 70C may enter the through hole 11C of the window plate 10C, which can further avoid contacting the window plate 10C with the compression member 50C inside the through hole 11C. The cushioning member 70C may include a cylindrical member 71C surrounding the compression member 50C inside the through hole 11C, so as to surely avoid contacting the window plate 10C with the compression member 50C.

### <Fifth embodiment>

Fig. 6 is a cross-sectional view of a window plate with vibration damping member according to a fifth embodiment. The window plate with vibration damping member according to the fifth embodiment is different from that of the first embodiment in that a vibration damping member is configured with a clip. In the following, different points will be mainly described. The window plate with vibration damping member according to the fifth embodiment includes a window plate 10D and a vibration damping member 20D.

The vibration damping member 20D is attached to the window plate 10D to reduce vibration of the window plate 10D. The vibration damping member 20D includes an opposite plate 30D, a viscoelastic layer 40D, and a compression member 50D.

The opposite plate 30D is provided at one of the surfaces of the window plate 10D, and is opposite the window plate 10D. Similar to the second embodiment, an opposite plate other than the opposite plate 30D may be provided at the other surface of the window plate 10D.

The viscoelastic layer 40D is provided between the window plate 10D and the opposite plate 30D. The viscoelastic layer 40D absorbs vibration of the window plate 10D by deforming viscoelastically.

Similar to the first embodiment, the compression member 50D is provided on the surface of the window plate 10D as viewed in the plate thickness direction of the window plate 10D, which restricts movement of the window plate 10D and the opposite plate 30D in the plate thickness direction relative to each other, and compresses the viscoelastic layer 40D in the plate thickness direction. Therefore, similar to the first embodiment described above, design flexibility of the vibration damping member 20D is high, and a good damping property can be ensured.

A through hole 11D penetrating the window plate 10D in the plate thickness direction may be formed in the window plate 10D in order that the compression member 50D is provided on the surface of the window plate 10D as viewed in the plate thickness direction of the window plate 10b, and the compression member 50D may be inserted in the through hole 11D.

The compression member 50D is, for example, configured with a clip, which includes a spindle 55D and an elastic member 56D. The spindle 55D is fixed on the opposite plate 30D, and is inserted in the through hole 11D of the window plate 10D. The elastic member 56D is provided on a tip of the spindle 55D, and is disposed on the side opposite the opposite plate 30D with respect to the window plate 10D.

A presser plate 57D may be disposed between the elastic member 56D and the window plate 10D to press the window plate 10D. An insertion hole 58D is formed in the presser plate 57D, and the elastic member 56D is inserted in the insertion hole 58D. The elastic member 56D deforms elastically while passing through the insertion hole 58D, and starts restoring elastically after passing the insertion hole 58D.

In the present embodiment, the presser plate 57D is disposed between the elastic member 56D and the window plate 10D, but in another embodiment, the presser plate 57D may not be provided and the elastic member 56D may directly touch the window plate 10D. If such a configuration is adopted, the elastic member 56D deforms elastically while passing through the through hole 11D of the window plate 10D, and starts restoring elastically after passing the through hole 11D.

Further, if the presser plate 57D is used, the elastic member 56D does not need to deform elastically while passing through the through hole 11D of the window plate 100. In this case, the diameter of the through hole 11D may be larger than that of the elastic member 56D in the natural state. By adopting such a configuration, a scratch on the window plate 10D is less likely to be made.

By elastic restoring force of the elastic member 56D, the elastic member 56D can restrict movement of the window plate 10D and the opposite plate 30D in the plate thickness direction relative to each other, and compress the viscoelastic layer 40D. Compressive force of the viscoelastic layer 40D can be managed by appropriately selecting size or shape of the elastic member 56D, or length of the spindle 55D.

The elastic members 56D may be arranged symmetrically with respect to the spindle 55D. For example, the elastic members 56D are symmetrically arranged on both sides of the spindle 55D. In this arrangement, since elastic restoring force occurs symmetrically with respect to the spindle 55D, good stability can be ensured. The number of the elastic members 56D is not limited to 2. More than two elastic members 56D may be provided. More than two elastic members 56D may be arranged around the spindle 55D at regular intervals. Alternatively, only one elastic member 56D may be provided. When one elastic member 56D is provided, the elastic member 56D may have a symmetrical shape centered on the spindle 55D.

In the present embodiment, the spindle 55D is fixed on the opposite plate 30D. But in another embodiment, the spindle 55D may be inserted in a through hole (not illustrated in the drawings) formed in the opposite plate 30D. In a case where the spindle 55D is inserted in the through hole in the opposite plate 30D, a flange having a larger diameter than the through hole in the opposite plate 30D may be formed at a tip of the spindle 55D. The flange may be disposed on the side opposite the window plate 10D with respect to the opposite plate 30D. When such a structure is adopted, similar to the case described above, by the elastic restoring force of the elastic member 56D, the elastic member 56D can restrict movement of the window plate 10D and the opposite plate 30D in the plate thickness direction relative to each other, and compress the viscoelastic layer 40D.

The spindle 55D and the elastic member 56D are formed of a resin so as to reduce damage to the window plate 10D. But in another embodiment, the spindle 55D and the elastic member 56D may be formed of metal to increase the elastic restoring force.

When at least a part of the compression member 50D is formed of metal, the vibration damping member 20D may include a cushioning member that is not illustrated in the drawings in order to avoid contacting the window plate 10D with the part of the compression member 50D formed of metal. Provision of the cushioning member can reduce damage to the window plate 10D, which is especially effective when the window plate 10D is formed of glass. The cushioning member may serve a same role as the presser plate 57D.

Similar to the first embodiment, the cushioning member may enter the through hole 11D, which can further avoid contacting the window plate 10D with the compression member 50D inside the through hole 11D. The cushioning member may include a cylindrical member surrounding the compression member 50D inside the through hole 11D, so as to surely avoid contacting the window plate 10D with the compression member 50D.

In the present embodiment, the compression member 50D is configured with a clip. But in another embodiment, the compression member 50D may be configured with a rivet having a deformable shaft whose tail can be plastically deformed. The deformable shaft may be a solid shaft, or a tubular shaft. When the tubular shaft is used as the deformable shaft, a mandrel may be provided in the deformable shaft. By pulling the mandrel, the tail of the deformable shaft is plastically deformed. The deformable shaft is fixed on the opposite plate 30D, and is inserted in the through hole 11D of the window plate 10D. The tail of the deformable shaft is plastically deformed after the deformable shaft is inserted in the through hole 11D, to restrict movement of the window plate 10D and the opposite plate 30D in the plate thickness direction relative to each other, and to compress the viscoelastic layer 40D in the plate thickness direction.

### <Sixth embodiment>

Fig. 7 is a cross-sectional view of a window plate with vibration damping member according to a sixth embodiment. The window plate with vibration damping member according to the sixth embodiment is different from that of the first embodiment in that a compression member is configured with an adhesion layer. In the following, different points will be mainly described. The window plate with vibration damping member according to the sixth embodiment includes a window plate 10E and a vibration damping member 20E.

The vibration damping member 20E is attached to the window plate 10E to reduce vibration of the window plate 10E. The vibration damping member 20E includes an opposite plate 30E, a viscoelastic layer 40E, and a compression member 50E.

The opposite plate 30E is provided at one of the surfaces of the window plate 10E, which is opposite the window plate 10E. Similar to the second embodiment, an opposite plate other than the opposite plate 30E may be provided at the other surface of the window plate 10E.

The viscoelastic layer 40E is provided between the window plate 10E and the opposite plate 30E. The viscoelastic layer 40E absorbs vibration of the window plate 10E by deforming viscoelastically.

Similar to the first embodiment, the compression member 50E is provided on the surface of the window plate 10E as viewed in the plate thickness direction of the window plate 10E, which restricts movement of the window plate 10E and the opposite plate 30E in the plate thickness direction relative to each other, and compresses the viscoelastic layer 40E in the plate thickness direction. Therefore, similar to the first embodiment described above, design flexibility of the vibration damping member 20E is high, and a good damping property can be ensured.

The compression member 50E is configured with an adhesion layer for bonding the window plate 10E and the opposite plate 30E together. The adhesion layer constituting the compression member 50E may be formed of a resin having higher rigidity than the viscoelastic layer 40E, that is, may be formed of a resin having higher Young's modulus than the viscoelastic layer 40E. The adhesion layer constituting the compression member 50E can restrict movement of the window plate 10E and the opposite plate 30E in the plate thickness direction relative to each other by adhesive force of the adhesion layer, and can compress the viscoelastic layer 40E.

As described above, the preferred embodiments and the like for the window plate with vibration damping member have been described. However, the present invention is not limited to the above-described specific embodiments, but various variations and modifications may be made without deviating from the scope of the present invention, described in claims.

For example, in the embodiments described above, the compression member is configured with one of a unit of a male screw and a female screw, a clip, a rivet, and an adhesion layer. However, the compression member may be configured with multiple parts described above. The combinations are not limited to a specific combination.

Further, in FIGS. 2 through 7, an adhesive layer may be provided between the window plate and the viscoelastic layer for bonding them together. In addition, an adhesive layer may be provided between the opposite plate and the viscoelastic layer for bonding them together.

In the sixth embodiment, an example is described that the compression member is configured with an adhesive layer. In this configuration, even if the adhesive layer does not compress the viscoelastic layer in the plate thickness direction, a good damping property can be ensured. The reason presumed is that vibration occurring at the window plate 10 is propagated to the opposite plate 30 more easily since the opposite plate is firmly fixed on the glass via the adhesive layer.

The present application is based on and claims the benefit of priority of Japanese Patent Application No. 2015-106394 filed on May 26, 2015, the entire contents of which are hereby incorporated by reference.

### REFERENCE SIGNS LIST

- 10: window plate
- 11: through hole
- 20: vibration damping member
- 30: opposite plate
- 40: viscoelastic layer
- 50: compression member
- 51: male screw
- 52: female screw
- 54: stopper
- 70: cushioning member
- 50D: compression member
- 55D: spindle
- 56D: elastic member
- 57D: presser plate
- 50E: compression member (adhesion layer)

## Claims

1. A window plate with vibration damping member comprising a window plate to be mounted on a window frame and a vibration damping member for reducing vibration of the window plate, the vibration damping member comprising:
an opposite plate provided at one or both surfaces of the window plate so as to be opposite the window plate;
a viscoelastic layer provided between the window plate and the opposite plate; and
a compression member provided on the surface of the window plate as viewed in a plate thickness direction to compress the viscoelastic layer in the plate thickness direction.

2. The window plate with vibration damping member according to claim 1, wherein a through hole penetrating the window plate in the plate thickness direction is formed in the window plate, and the compression member is inserted in the through hole.

3. The window plate with vibration damping member according to claim 2, wherein the compression member comprises a male screw and a female screw into which the male screw is screwed, and at least one of the male screw and the female screw is inserted in the through hole.

4. The window plate with vibration damping member according to claim 3, wherein the compression member comprises a stopper configured to restrict movement of the male screw and the female screw in the plate thickness direction relative to each other.

5. The window plate with vibration damping member according to any one of claims 2 to 4, wherein the compression member comprises a spindle to be inserted in the through hole and an elastic member provided on a tip of the spindle, the elastic member being configured, by elastic restoring force of the elastic member, to restrict movement of the window plate and the opposite plate in the plate thickness direction relative to each other, and to compress the viscoelastic layer in the plate thickness direction.

6. The window plate with vibration damping member according to any one of claims 2 to 5, wherein a part of the compression member is formed of metal, and the vibration damping member comprises a cushioning member to avoid contacting the window plate with the part of the compression member.

7. The window plate with vibration damping member according to claim 6, wherein the cushioning member is configured to enter the through hole.

8. The window plate with vibration damping member according to any one of claims 1 to 7, wherein the compression member comprises an adhesion layer to bond the window plate and the opposite plate together.

9. A vibration damping member for reducing vibration of a window plate to be mounted on a window frame, the vibration damping member comprising:
an opposite plate provided at one or both surfaces of the window plate so as to be opposite the window plate;
a viscoelastic layer provided between the window plate and the opposite plate; and
a compression member provided on the surface of the window plate as viewed in a plate thickness direction to compress the viscoelastic layer in the plate thickness direction.

10. The vibration damping member according to claim 9, wherein the compression member is inserted in a through hole formed on the window plate, the through hole penetrating the window plate in the plate thickness direction.

11. The vibration damping member according to claim 10, wherein the compression member comprises a male screw and a female screw into which the male screw is screwed, and at least one of the male screw and the female screw is inserted in the through hole.

12. The vibration damping member according to claim 11, wherein the compression member comprises a stopper configured to restrict movement of the male screw and the female screw in the plate thickness direction relative to each other.

13. The vibration damping member according to any one of claims 10 to 12, wherein the compression member comprises a spindle to be inserted in the through hole and an elastic member provided on a tip of the spindle, the elastic member being configured, by elastic restoring force of the elastic member, to restrict movement of the window plate and the opposite plate in the plate thickness direction relative to each other, and to compress the viscoelastic layer in the plate thickness direction.

14. The vibration damping member according to any one of claims 10 to 13, wherein a part of the compression member is formed of metal, and the vibration damping member comprises a cushioning member to avoid contacting the window plate with the part of the compression member.

15. The vibration damping member according to claim 14, wherein the cushioning member is configured to enter the through hole.
